Europäisches Patentamt

European Patent Office

Office européen des brevets

(11) Veröffentlichungsnummer: **0 387 477**
**A1**

(12) **EUROPÄISCHE PATENTANMELDUNG**

(21) Anmeldenummer: **89890076.6**

(22) Anmeldetag: **16.03.89**

(51) Int. Cl.5: **B67D 1/00, G05D 11/13**

(43) Veröffentlichungstag der Anmeldung:
**19.09.90 Patentblatt 90/38**

(84) Benannte Vertragsstaaten:
**AT BE CH DE ES FR GB GR IT LI NL SE**

(71) Anmelder: **ROPA**
**Wasseraufbereitungs-anlagenbau**
**Gesellschaft m.b.H.**
**Lokalbahnplatz 5**
**A-4600 Wels(AT)**

(72) Erfinder: **Pachernegg, Rudolf**
**Maria Theresienstrasse 22**
**A-4600 Wels(AT)**
Erfinder: **Schubert, Karl-Heinz**
**Austrasse 2a**
**A-5061 Elsbethen(AT)**

(74) Vertreter: **Hübscher, Heiner, Dipl.-Ing. et al**
**Spittelwiese 7**
**A-4020 Linz(AT)**

(54) **Verfahren zum portionsweisen Zubereiten von Mischgetränken und Ausschenkvorrichtung zur Durchführung dieses Verfahrens.**

(57) Bei einem Verfahren zum portionsweise Zubereiten von Getränken aus Wasser bzw. $CO_2$-hältigem Wasser und wenigstens einem sirupartigen Konzentrat wird das Wasser einer Abgabestelle (4) zugeführt und das Konzentrat vor der Abgabestelle (4) unter Überdruck in einem vorgegebenen Mischungsverhältnis in das strömende Wasser eingespritzt. Die Durchsatzmenge des strömenden Wassers wird mittels einer Meßeinrichtung (8) in im Verhältnis zur Abgabeportion kleinen, in der Größenordnung von ml liegenden Teilmengen erfaßt und es wird in jede dieser Teilmengen nur während eines Teiles ihrer Durchströmzeit durch die Einströmstelle mittels wenigstens einer Einspritzpumpe (6) eine vom Mischungsverhältnis abhängige äquivalente Teilmenge des Konzentrates eingespritzt. Eine Ausschenkvorrichtung zur Durchführung des Verfahrens, Stell- und Steuereinrichtungen (11, 12, 19, 25) für die Einspritzpumpe (6), Korrektureinrichtungen zur Ausschaltung der Auswirkung äußerer Parameter und eine Spüleinrichtung (27 - 35) für die Ausschenkvorrichtung werden beschrieben.

FIG.1

## Verfahren zum portionsweisen Zubereiten von Mischgetränken und Ausschenkvorrichtung zur Durchführung dieses Verfahrens

Die Erfindung betrifft ein Verfahren zum portionsweisen Zubereiten von Mischgetränken gemäß dem Oberbegriff des Patentanspruches 1.

Eine Weiterbildung der Erfindung betrifft eine Ausschenkvorrichtung zur Abgabe von Mischgetränken gemäß dem Oberbegriff des Patentanspruches 5.

Verfahren und Vorrichtungen der gegenständlichen Art arbeiten nach dem sogenannten Postmix-Verfahren, bei dem die Getränke unmittelbar oder während der Abgabe in einem gewählten Mischungsverhältnis aus den Zutaten zubereitet werden.

Bei bekannten Verfahren der vorliegenden Art werden sowohl das Wasser als auch das bzw. die Konzentrate unter Überdruck gesetzt, wobei das Mischungsverhältnis durch den Druck des Konzentrates und die Querschnitte der Einspritzöffnung im Verhältnis zum Durchtrittsquerschnitt des Wassers bestimmt werden und eine kontinuierliche Mischung des Wassers und des Konzentrates vor der Abgabe erfolgt. Nach einer Variante wird das Wasser durch eine Injektordüse in eine Mischkammer geleitet und saugt über Einlässe mit einstellbarem Querschnitt die hier drucklos zugeführten Konzentrate im eingestellten Mischungsverhältnis an. Ein Beispiel für eine derartige Ausführung entnimmt man der US-A-3 643 688, wogegen das erstbeschriebene Verfahren grundsätzlich aus der DE-B-1 557 043 bekannt ist.

Aus der DD-B-115 893 ist es wieder bekannt, das Wasser und die Zutaten erst an einem Auslaß, der als Mischkopf ausgeführt wird, zusammenzuführen, wobei für die portionsweise Abgabe die zusätzlich zum Wasser beizugebenden Zutaten bei feststehender Getränkeportion auch in eigenen Meßbehältern vorgemessen werden können. Eine chargenweise Mischung bei portionsweise abzugebenden Getränken, bei der das Wasser und die Zutaten, also der Sirup bzw. die sonstigen Geschmacksstoffe in gesonderten Dosierkammern vorgemessen und dann gemeinsam abgegeben werden, entnimmt man der DE-A-2 316 359. Eine Variante dazu ist in der DE-C-1 920 627 beschrieben. Bei manchen Ausführungen für die portionsweise Abgabe wird auch das jeweilige Konzentrat vor dem Wasser oder am Beginn des Wasserzulaufes unmittelbar in das Trinkgefäß abgegeben und durch Einspritzen des Wassers im scharfen Strahl mit dem Wasser gemischt.

Verfahren nach dem Oberbegriff des Patentanspruches 1 haben den Vorteil eines technisch einfachen Aufbaues der Mischanlage, sind aber bisher mit dem Nachteil behaftet, daß die Dosierung oft nicht ausreichend genau erfolgen kann, so daß sich starke Qualitätsveränderungen im abgegebenen Getränk ergeben. Ferner müssen die Anlagen bei sich in der Zusammensetzung stärken unterscheidenden Getränken in langwierigen Einstellverfahren an die jeweiligen Getränke angepaßt bzw. sogar für verschiedenartige Getränke im Grundaufbau verschieden ausgeführt werden. Wird nach dem anderen Verfahren sowohl die Gesamtwassermenge als auch die Gesamt menge des oder der Konzentrate gemessen, so stimmt zwar die Dosierung, eine ausreichende Durchmischung des Getränkes ist aber häufig nicht gewährleistet und es kommt vor allem bei $CO_2$-hältigen Getränken zu einem starken Kohlensäureverlust, wenn sich die Getränkebestandteile erst beim Eintritt in das Trinkgefäß endgültig vermischen.

Bei allen Ausschenkvorrichtungen ergibt sich das Problem, daß es während längerer Stillstandszeiten, z.B. über Nacht, in den nicht nur Wasser, sondern auch Getränkemischungen enthaltenden Behältern und Leitungsteilen zu einer Entmischung, einer Entartung oder sogar zu einem Verderben der hier vorhandenen Getränkereste kommen kann, was im günstigsten Fall nur die Geschmacksqualität der dann abgegebenen Getränkeportionen beeinflußt, im ungünstigen Fall aber sogar zu einer Gefährdung der die Getränke konsumierenden Personen führen kann.

Aufgabe der Erfindung ist es, ein Verfahren und eine Vorrichtung der gegenständlichen Art zu verbessern, um bei der Herstellung von Postmix-Getränken eine einwandfreie Durchmischung der Bestandteile und eine exakte Einhaltung des gewählten Mischverhältnisses zu erreichen. Eine Teilaufgabe der Erfindung besteht darin, eine einfache und betriebssichere Ausgabevorrichtung zu schaffen, die sich für verschiedene Konzentrate und verschiedene Mischungsverhältnisse eignet und auch auf verschiedene Mischungsverhältnisse eingestellt werden kann und bei der das Mischungsverhältnis beeinflussende Parameter ausreichend Berücksichtigung finden. Eine weitere Teilaufgabe besteht in der Schaffung einer Ausschenkvorrichtung, bei der eine Qualitätsbeeinträchtigung der Getränke durch länger in der Anlage verbleibende Getränkereste und Infektionen dieser Getränkereste sicher verhindert ist.

Die gestellte Hauptaufgabe wird durch die Merkmale der Patentansprüche 1 und 5 gelöst.

Der Vorteil des erfindungsgemäßen Verfahrens besteht insbesondere darin, daß sehr kleine Teilmengen des in den abzugebenden Getränkeportionen enthaltenen Wassers erfaßt und jeder dieser Teilmengen die äquivalente Teilmenge an Konzentrat zugeführt wird, so daß einerseits die Vorteile einer Mengendosierung über die Einspritzmenge der Pumpe erhalten bleiben, anderseits aber mit kleinen Pumpen das Auslangen gefunden wird und auch eine gute Durchmischung des Wassers mit dem bzw. den Konzentraten gewährleistet ist, da in jede kleine durchströmende Wassermenge eine entsprechende kleine Menge an Konzentrat eingespritzt wird. Das Verfahren kann sowohl bei der kontinuierlichen als auch bei der portionsweisen Abgabe von Getränken eingesetzt werden, wobei eine Portionierung durch Absperren der Wasserzufuhr nach Durchsatz einer vorgegebenen Wassermenge erzielbar ist. Für diese Zwecke kann ein einfacher stellbarer Zähler eingesetzt werden, der die vorgegebene Wassermenge aus der Anzahl der erfaßten Teilmengen bestimmt. Als Meßeinrichtung für die Durchsatzmenge des strömenden Wassers können empfindliche Hallgeneratoren Verwendung finden, man kann aber auch Meßeinrichtungen einsetzen, die schon kleine Durchsatzmengen auf induktivem, kapazitivem oder optoelektronischem Weg erfassen und vorzugsweise für jede erfaßte Mengeneinheit wenigstens einen Steuerimpuls abgeben, die einer übergeordneten Steuereinrichtung zugeführt wird. Wenn man die von der Meßeinrichtung erfaßbaren Teilmengen des strömenden Wassers und das Fördervolumen der Einspritzpumpe so aufeinander abstimmt, daß die Pumpe in der Lage ist, für jede Teilmenge des Wassers eine Teilmenge an Konzentrat zu fördern, die beim niedrigsten vorkommenden Mischungsverhältnis erforderlich ist, so kann man mit der Vorrichtung alle höheren Mischungsverhältnisse einfach durch Verringerung der Pumpleistung beherrschen. Im einfachsten Fall wird hier gemäß Anspruch 2 vorgegangen. Dabei ist sowohl eine mechanische Begrenzung des Förderhubes über Anschläge als auch eine Bestimmung des Fördervolumens gemäß Anspruch 3 möglich. Die letztgenannte Ausführung hat den Vorteil, daß hier eine Einstellung über elektrische Steuermittel ohne unmittelbaren Eingriff in die Pumpe selbst vorgenommen werden kann.

Es ist ohne weiteres möglich, bei einer Ausschenkvorrichtung mehrere Abgabestellen für verschiedene Mischgetränke vorzusehen, wobei man in einer gemeinsamen Zuleitung für das Wasser bzw. das $CO_2$-hältige Wasser arbeitet und jeder Abgabestelle in der zu ihr führenden Druckleitung eine Mischkammer oder eine sonstige Einspritzstelle für das oder die zum jeweiligen Mischgetränk gehörigen Konzentrate zuordnet. In allen Fällen, insbesondere aber beim Einsatz verschiedener Konzentrate, bei stark wechselnden äußeren Temperaturbedingungen und bei möglichen Druckschwankungen in der Druckleitung können diese Parameter, nämlich die Viskosität des Konzentrates und der Druck in der Leitung (der dem Einspritzdruck entgegenwirkt) die Dosiergenauigkeit über die Pumpe beeinträchtigen. Um dies zu verhindern, kann gemäß Anspruch 4 vorgegangen werden. Der Druck in der Druckleitung kann systembedingt sein und etwa vom momentanen Arbeitsdruck einer in einem Getränkeautomaten vorhandenen Karbonisierungsstufe abhängen. Vielfach ergeben sich insbesondere bei Verwendung von Zapfventilen auch Druckschwankungen durch verschieden starkes Öffnen des Zapfventiles.

Eine bevorzugte Ausbildung der Einspritzpumpe entnimmt man dem Anspruch 6. In den Ansprüchen 7 und 8 sind Möglichkeiten für die exakte Einstellung der Fördermenge der Pumpe angegeben. Um eine Einstellung auf verschiedenartige Konzentrate, verschiedene Mischungsverhältnisse und verschiedene äußere Parameter vornehmen zu können, kann gemäß Anspruch 9 vorgegangen werden.

Die einfachste Art der Steuerung ergibt sich aus Anspruch 10. Wenn mehrere Konzentrate zugesetzt werden sollen, kann man die einzelnen Pumpen auf verschiedene Fördermengen einstellen. Flüchtige Stoffe bzw. die sogenannte Waterphase können über eigene Dosierpumpen etwa am Ende der Abgabe einer Getränkeportion zugesetzt werden, wobei dann, wenn nur ganz geringe Mengen zuzusetzen sind, nicht jeder, sondern nur jeder n-te Impuls der Mengenmeßeinrichtung für die Betätigung der jeweiligen Förderpumpe ausgenützt wird.

Wenn nach den Ansprüchen 8 und 9 vorgegangen wird, kann man für die Betätigung des Elektromagneten der Pumpe Gleichstromimpulse verwenden, die über die Steuereinrichtung ausgelöst werden und deren Impulsdauer eingestellt werden kann. Man kann hier auch einen Taktgeber verwenden, der Gleichstromimpulse bestimmter Dauer erzeugt, wobei über die Steuereinrichtung zu jedem einlangenden Impuls vom Mengenmesser ein Betätigungsimpuls zum Arbeitsmagneten der Pumpe freigegebenen und die Pumpdauer gegebenenfalls über Stellglieder zusätzlich eingestellt wird.

Eine besonders einfache Ausführung für die Steuerung und Betätigung des Elektromagneten entnimmt man dem Anspruch 11. Hier werden keine Impulserzeuger bzw. Impulsformerstufen für die Betätigungsimpulse des Elektromagneten benötigt, sondern es wird einfach die auf einen vom Mengenmesser kommenden Steuerimpuls folgende (je nach Gleichrichterschaltung positive oder negative) Stromhalbwelle zur Bildung des Betätigungsimpulses ausge nützt, wobei nach den angegebenen Möglichkeiten auch nur eine Teilausnützung dieser Halbwelle vorgenommen werden kann.

Die der Erfindung zugrundeliegende Teilaufgabe der Schaffung hygienisch einwandfreier Bedingungen für den Ausschank wird prinzipiell durch die Ausführung nach Anspruch 12 gelöst. Besonders vorteilhafte Weiterbildungen entnimmt man den Ansprüchen 13 und 14. Dabei ist festzuhalten, daß entsprechende Spül- und Reinigungseinrichtungen auch nachträglich in andere Ausschenkvorrichtungen eingebaut werden können, wobei man sich bei den Betätigungseinrichtungen möglichst nach dem vorhandenen Steuersystem richten wird. Wenn nur einfache Steuereinrichtungen vorhanden sind, kann man bei der Spüleinrichtung die verschiedenen Absperrorgane und Zugabeeinrichtungen durch Handbetätigung steuern. Bei einer weitgehend automatisierten Steuerung für die Mixanlage wird man auch die Reinigungseinrichtung von der Steuerautomatik her betätigen.

Weitere Einzelheiten und Vorteile des Erfindungsgegenstandes entnimmt man der nachfolgenden Zeichnungsbeschreibung.

In der Zeichnung ist der Erfindungsgegenstand beispielsweise veranschaulicht. Es zeigt

Fig. 1 in schematisierter Darstellungsweise eine Ausschenkvorrichtung zur Abgabe von Mischgetränken und

Fig. 2 eine Kurvendarstellung zur Erläuterung der Impulssteuerung.

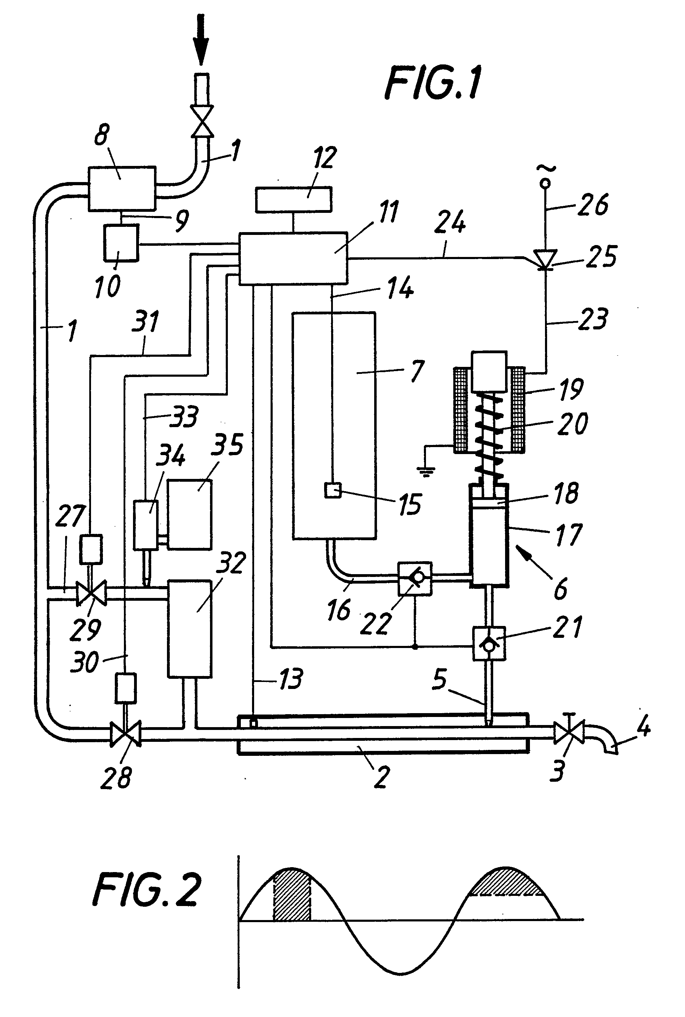

In Fig. 1 wurden nur die für die Erfindung wesentlichen Teile der Ausschenkvorrichtung im Zusammenhang mit einer einzigen Abgabestelle veranschaulicht. Es ist zu verstehen, daß auch mehrere Abgabestellen für verschiedene Getränke vorgesehen werden können, wobei jeder Abgabestelle die noch zu beschreibende Mischkammer und Einspritzpumpe zugeordnet wird, wobei man aber vorzugsweise für alle Abgabestellen eine gemeinsame Druckwasserzuleitung und Steuereinrichtung vorsieht.

Nach Fig. 1 ist eine Druckleitung 1 vorgesehen, die entweder unmittelbar an eine Wasserleitung oder an einen Kühler und bzw. oder Karbonisator zur Erzeugung von $CO_2$-hältigem Wasser anschließt, wobei der Druck des Wassers in der Leitung bei geschlossenem Auslaß z. B. 3 - 5 bar betragen kann. Die Leitung 1 führt zu einer Mischkammer 2 und dann zu einem Zapfhahn 3 und einem Auslaß 4. Anstelle eines einfachen Zapfhahnes 3 kann auch ein mengenabhängig gesteuertes Dosierventil zur Abgabe von vorherbestimmten Einzelportionen vorgesehen werden. Dieses letztere Dosierventil kann von der noch zu beschreibenden Steuereinheit gesteuert werden.

Im Bereich der Mischkammer 2 mündet in die Leitung 1 selbst oder eben in die Kammer 2 eine Einspritzdüse 5, die über eine Einspritzpumpe 6 mit aus einem Vorratsbehälter 7 angesaugtem Konzentrat beschickbar ist. Wenn das Getränk aus mehreren Zutaten zubereitet werden soll, wird eine entsprechende Anzahl von Einspritzdüsen 5, Pumpen 6 und Vorratsbehältern 7 vorgesehen.

In der Leitung 1 liegt ein hochempfindlicher Mengenfühler 8, der beim Öffnen des Auslasses 3, 4 die durchströmende Flüssigkeit in kleiner, in der Größenordnung ml liegenden Teilmengen erfaßt und für jede erfaßte Teilmenge über eine Leitung 9 einen Zählimpuls an einen Speicher 10 abgibt. Dieser Speicher 10 kann auch eine Schnittstelle bzw. Umformerstufe enthalten, um eine Anpassung des Mengenfühlers an die Gegebenheiten einer zentralen Steuereinheit 11 zu ermöglichen. Die Steuereinheit 11 ist über eine Eingabeeinheit 12 programmierbar und über Meßleitungen 13, 14 mit einem Druckfühler in der Kammer 2 und einem Temperaturfühler 15 im Vorratsbehälter 7 oder einer vom Vorratsbehälter 7 zur Pumpe 6 führenden Leitung 16 verbunden.

Die Einspritzpumpe 6 besitzt einen Zylinder 17 und einen Arbeitskolben 18, der über einen Elektromagneten 19 im Sinne der Ausführung eines Arbeitshubes betätigbar und über eine Feder 20 rückstellbar ist. Rückschlagventile 21, 22 oder von der Steuereinheit 11 gesteuerte entsprechende Ventile schließen beim Arbeitshub des Kolbens 18 die Leitung 16 und geben den Einlaß der Einspritzdüse frei bzw. schließen während der Kolbenrückstellung den Einlaß der Einspritzdüse 5 und geben die dann als Ansaugleitung wirkende Leitung 16 frei. Der Betätigungsmagnet 19 ist über eine Leitung 23 und eine von der Steuereinheit 11 über eine Leitung 24 gesteuerte Gleichrichterschaltung 25 mit einem Wechselstrom-Versorgungsnetz 26 verbunden.

Bei der einfachsten Art der Steuerung frägt die Steuereinheit 11 - die als Mikrocomputer ausgebildet sein kann - in ihrem Arbeitstakt den Speicher 11 ab. Steht am Speicher 11 ein vom Mengenmesser 8 kommender Impuls an, so gibt die Steuereinheit 11 über die Leitung 24 die Gleichrichterschaltung 25 frei, so daß diese die nächste Stromhalbwelle an den Elektromagneten 19 legt. Die Einspritzpumpe 6 ist so ausgelegt, daß eine vollständige Stromhalbwelle einen vollständigen Arbeitshub des Kolbens 18 erzeugen kann. Beim beschriebenen Fall würde also das vollständige Füllvolumen des Zylinders 17 über die Einspritzdüse in die durch die Kammer 2 strömende Flüssigkeit eingespritzt. Über die Eingabeeinheit 12 kann die Einschaltzeit des Elektromagneten 19 gegenüber der Halbwellenzeit verringert werden. In Fig. 2 sind zwei aufeinanderfolgende, positive Wechselstrom-Halbwellen eingezeichnet. Bei der ersten Halbwelle ist gezeigt, daß unter Verwendung von Zeitgliedern oder einer Phasenanschnittsteuerung nur der schraffiert eingezeichnete Bereich der Halbwelle für die Betätigung des Magneten ausgenützt wird. Bei der zweiten Halbwelle wurde angedeutet, daß man auch durch angelegte Vorwiderstände, Spannungsteilerschaltungen usw. einen Pegel einstellen und nur den über diesem Pegel liegenden Bereich der Halbwelle für die Betätigung des Magneten 19 ausnützen kann.

Zusätzlich zu der über die Eingabeeinheit 12 programmierten Einschaltzeit für den Magneten - die die Fördermenge der Kolbenpumpe 6 bei jedem Hub bestimmt - kann man auch eine Korrektur vornehmen und die Einschaltzeit in Abhängigkeit von den über die Leitungen 13, 14 zugeführten Meßwerten des Druck- bzw. Temperaturfühlers selbsttätig verändern, so daß die über die Eingabeeinheit 12 eingestellte Grunddosierung bei Änderungen der äußeren Parameter erhalten bleibt.

Vorzugsweise ist der Speicher 10 als über die Steuereinheit 11 rückstellbarer Speicher ausgebildet, damit mit einfachen Mitteln jeder von der Meßeinrichtung 8 kommende Meßimpuls erfaßt und in einen Pumpenhub umgesetzt werden kann. Weitere Speicher oder Zähler können zur Steuerung einer Dosiereinrichtung für das Getränk, die den Auslaß 3 steuert, Verwendung finden.

Die Ausschenkvorrichtung nach Fig. 1 sieht noch die zusätzliche Möglichkeit vor, alle mit Bestandteilen des Getränkes, die zusätzlich zum Wasser bzw. karboniertem Wasser zugeführt werden, in Berührung kommenden Teile der Ausschenkvorrichtung voll- oder halbautomatisch zu reinigen.

In der Folge wird eine automatische Reinigung beschrieben. Es ist aber klar, daß die entsprechenden Reinigungsschritte auch unter Handsteuerung eingeleitet bzw. durchgeführt werden können. Eine Reinigung kann notwendig werden, wenn etwa bei Verwendung mehrerer Behälter 7 und Einspritzpumpen 6 die Getränkezusammensetzung geändert oder eine andere Getränkesorte abgegeben werden soll. Auch vor Inbetriebnahme der Ausschenkvorrichtung nach längerem Stillstand sowie nach Ende des Schankbetriebes in einer Gaststätte empfiehlt sich eine entsprechende Reinigung, da in der Leitung 1 im Zapfhahn 3 und im Auslaß 4 verbleibende Getränkereste entarten oder verderben können bzw. zumindest Geschmackseinbußen bedingen.

Beim Ausführungsbeispiel zweigt für die Reinigung vor der Mischkammer 2 von der Leitung 1 eine Nebenleitung 27 ab und die Leitung 1 ist durch ein Absperrorgan 28 nach dieser Abzweigstelle absperrbar. Ein weiteres Absperrorgan 29 liegt in der Leitung 27. An Stelle der beiden Absperrorgane 28, 29 könnte vor allem bei Handbetrieb auch ein Dreiwegehahn oder -schieber vorgesehen werden. Bei der Einstellung des Programmes "Spülen" schaltet die Steuereinheit 11 die Einspritzpumpe 6 ab. Gegebenenfalls nach einer Vorspülung durch Öffnen des Zapfhahnes 3 und Zufuhr von Wasser aus der Leitung 1 wird von der Steuereinheit 11 über eine Steuerleitung 30 das Absperrorgan 28 geschlossen und das Absperrorgan 29 über eine Steuerleitung 31 geöffnet. Wird nun der Zapfhahn 3 von Hand aus oder über eine weitere Steuerleitung der Steuereinrichtung 11 geöffnet, so strömt über das Absperrorgan 29 Wasser oder karboniertes Wasser in den Einlaßbereich einer beim Ausführungsbeispiel vorgesehenen Mischkammer 32, dann durch die Mischkammer 2, den Zapfhahn 3 und den Auslaß 4. Diesem Wasser kann über eine Dosiereinrichtung in der Mischkammer 32 oder, wie dargestellt, über eine von der Steuereinrichtung 11 über eine Leitung 33 gesteuerte Einspritzpumpe 34, die vorzugsweise wie die Pumpe 6 ausgebildet ist und in die Leitung 27 einspritzt, aus einem Behälter 35 ein Spül- oder Desinfektionsmittel zugesetzt werden. Bei der letzteren Ausführung ist die Mischkammer nicht unbedingt notwendig, wenn man sie nicht zur Vorbereitung einer bestimmten Spülmittelmenge vor dem eigentlichen Spülvorgang einsetzen will. Man kann das Spülmittel während einer bestimmten Zeitspanne zusetzen oder bei dosierter Zugabe den Zapfhahn 3 schließen, sobald die Leitung 1 zwischen dem Mischbehälter 32 und dem Zapfhahn 3 das mit dem Desinfektions- oder Spülmittel versetzte Wasser führt. Auch die Zugabe verschiedener Desinfektions- oder Spülmittel mit eigenen Einspritzpumpen ist möglich. Nach einer wählbaren Zeitspanne, z.B. nach der Nachtruhe, wird der Zapfhahn 3 wieder geöffnet und es wird mit reinem Wasser bzw. karboniertem Wasser durchgespült. Dabei wird auch die Kammer 32 bei abgeschalteter Einspritzpumpe 34 gespült. Für eine neuerliche Getränkeabgabe wird das Absperrorgan 27 wieder geschlossen und das Absperrorgan 28 geöffnet. Eine Spüleinrichtung 27 - 35 kann auch nachträg-lich in bestehende Ausschenkvorrichtungen einge-baut werden, wobei man, falls die Leitung 1 karboniertes Wasser führt und mit normalem Wasser gespült werden soll, über das Absperrorgan 29 auch eine Wasserleitung an den Einspritzbereich der Pumpe 34 bzw. den Mischer 32 anschließen kann. In diesem Fall fällt die Verbindung 27 vom Absperrorgan 29 zur Leitung 1 weg.

Für den Vorratsbehälter 35 kann ein Mengenfühler vorgesehen werden, der bei Leermeldung über die Steuereinrichtung 11 den Betrieb blok-kiert. Man kann sogar Sonden vorsehen, die elektrische Kenndaten der zugelassenen Reinigungs-oder Desinfektionsmittel bzw. deren Lösung, z.B. den Leitwert, erfassen und bei abweichenden Daten den Betrieb blockieren. Schließlich kann eine Anzeigevorrichtung vorgesehen werden, die jeweils die durchgeführte bzw. die Daten der letzten durchgeführten Reinigung anzeigt oder entsprechende Daten bei Großschankanlagen an eine zentrale Steuereinrichtung abgibt. Man kann in der Kammer 32 oder im Einmündungsbereich vor deren Auslaß in die Leitung 1 zusätzliche Absperrorgane vorsehen, um sicher zu verhindern, daß Reste der Reinigungsflüssigkeit in das der Getränkezubereitung zugeführte Wasser gelangen.

**Ansprüche**

1. Verfahren zum portionsweisen Zubereiten von Mischgetränken aus Wasser bzw. $CO_2$-hältigem Wasser und wenigstens einem sirupartigen Konzentrat, bei dem das Wasser bzw. das $CO_2$-hältige Wasser einer Abgabestelle (4) zugeführt und das oder die Konzentrate vor der Abgabestelle unter Überdruck in einem vorgegebenen Mischungsverhältnis in das strömende Wasser eingespritzt werden, dadurch gekennzeichnet, daß die Durchsatzmenge des strömenden Wassers mittels einer Meßeinrichtung (8) in im Verhältnis zur Abgabeportion kleinen, in der Größenordnung von ml liegenden Teilmengen erfaßt und in jede dieser Teilmengen nur während eines Teiles ihrer Durchströmzeit durch die Einspritzstelle (5) mittels wenigstens einer Einspritzpumpe (6) eine vom Mischungsverhältnis abhängige, äquivalente Teilmenge des konzentrates eingespritzt wird.

2. Verfahren nach Anspruch 1, dadurch gekennzeichnet, daß für jede erfaßte Teilmenge des Wassers ein Förderhub, der als Membran- oder Kolbenpumpe ausgebildeten Einspritzpumpe (6) ausgelöst wird, wobei die abgegebene Einzelmenge des Konzentrates durch Änderung des Fördervolumens der Pumpe eingestellt wird.

3. Verfahren nach Anspruch 1 oder 2, dadurch gekennzeichnet, daß das Fördervolumen der Pumpe (6) durch eine zeitliche Begrenzung ihres Arbeitstaktes auf unter die zum vollständigen Füllen bzw. Entlerren erforderlichen Zeiten liegende Werte eingestellt wird.

4. Verfahren nach Anspruch 3, dadurch gekennzeichnet, daß für die Einstellung des Fördervolumens der Pumpe (6) zusätzlich die Förderung beeinflussende Parameter, insbesondere der Wasserdruck und die Viskosität und bzw. oder die diese beeinflussende Temperatur des Konzentrates erfaßt und die Einstellung während des Betriebes nach diesen Parametern korrigiert wird.

5. Ausschenkvorrichtung zur Abgabe eines nach dem Verfahren nach einem der Ansprüche 1 bis 4 zubereiteten Mischgetränkes, mit einer zu einem als Zapfhahn (3) oder Portioniereinrichtung ausgebildeten Aus laß führenden Druckleitung (2) zur Zufuhr von unter Überdruck stehendem Wasser oder $CO_2$-hältigem Wasser in die vor dem Auslaß (4), gegebenenfalls in einer Mischkammer (2), wenigstens eine dosiert mit einem unter Druck gesetzten Konzentrat beschickbare Einspritzdüse (5) mündet, wobei Stelleinrichtungen (11, 18 19, 25) zur Bestimmung des Mischungsverhältnisses Wasser/Konzentrat vorgesehen sind, dadurch gekennzeichnet, daß der Einspritzstelle in der Druckleitung (1) vorgeordnet wenigstens ein für die Erfassung kleiner, in der Größenordnung ml liegender Teilmengen geeigneter Mengenfühler (8) und für die Beschickung der Einspritzdüse (5) eine von einem Vorratsbehälter (7) für das Konzentrat versorgte Einspritzpumpe (6) vorgesehen ist, deren Fördervolumen pro Arbeitstakt entsprechend dem möglichen Mischungsverhältnis Wasser/Konzentrat an eine vom Mengenfühler (8) erfaßbare Teilmenge angepaßt ist, und daß die Steuereinrichtung (11) für die Pumpe (6) für jede erfaßte Teilmenge des durchströmenden Wassers einen Einspritztakt der Pumpe steuert.

6. Ausschenkvorrichtung nach Anspruch 5, dadurch gekennzeichnet, daß die Einspritzpumpe (6) als einlaßseitig mit dem Vorratsbehälter (7) für das Konzentrat verbundene, selbstansaugende Kolbenpumpe ausgebildet ist, deren Kolben (18) über einen von der Steuereinheit (11) schaltbaren Elektromagneten (19) gegebenenfalls gegen eine Rückstellfeder (20) im Sinne der Ausführung des Förderhubes betätigbar ist.

7. Ausschenkvorrichtung nach Anspruch 6, dadurch gekennzeichnet, daß das Fördervolumen der Pumpe (6) durch Einstellung des Hubes des Kolbens (18) variierbar ist.

8. Ausschenkvorrichtung nach einem der Ansprüche 5 bis 7, dadurch gekennzeichnet, daß der Hub des Kolbens (18) der Pumpe (6) von der Steuereinrichtung (11) aus durch Änderung der Einschaltzeit des Elektromagneten (19) stellbar ist.

9.. Ausschenkvorrichtung nach Anspruch 8, dadurch gekennzeichnet, daß die Steuereinrichtung (11) auf verschiedene Schaltzeiten für den Elektromagneten (19) frei programmierbar ist, wobei eine zusätzliche mit Temperatur- oder Viskositätsfühlern (15) für das Konzentrat und bzw. oder Druckfühlern für den Wasserdruck in der Druckleitung (1) verbundene Korrekturstufe vorgesehen ist.

10. Ausschenkvorrichtung nach einem der Ansprüche 5 bis 9, dadurch gekennzeichnet, daß die Steuereinrichtung (11) für jede vom Mengenfühler (8) erfaßte Teilmenge des strömenden Wassers einen Betätigungsimpuls für den Elektromagneten (19) der Pumpe (6) auslöst und Stelleinrichtungen zur Einstellung des Förderhubes des Pumpenkolbens (18) über die Impulsdauer aufweist.

11. Ausschenkvorrichtung nach Anspruch 10, dadurch gekennzeichnet, daß zur Versorgung des Elektromagneten (19) das Wechselstromnetz (26) dient, eine Einspritzpumpe (6) vorgesehen ist, deren Kolben (18) innerhalb einer Halb welle des Wechselstromes einen vollen Arbeitshub ausführen kann und die Steuereinrichtung (11) nach Einlangen eines Meßimpulses vom Mengenfühler (8) eine am Wechselstromnetz liegende Einweg-Gleichrichterschaltung (25) bei der nächsten Halbwelle des Wechselstromes an den Betätigungsmagneten (19) der Pumpe (6) schaltet, wobei die effektive Einschaltdauer des Elektromagneten über Vorwiderstände, eine Phasenanschnittsteuerung oder Zeitgeber auf einen unter der Halbwellenzeit liegenden Wert stellbar ist.

12. Ausschenkvorrichtung nach einem der Ansprüche 5 - 11, dadurch gekennzeichnet, daß für die Ausschenkvorrichtung eine Spüleinrichtung (27 bis 35) vorgesehen ist und daß mittels der Spüleinrichtung einem absperrbaren Einlaß der Druckleitung (1), der vor dem Zufuhrbereich (2) des Konzentrates vorgesehen ist, eine Spül- bzw. Desinfektionsflüssigkeit zuführbar ist.

13. Ausschenkvorrichtung nach Anspruch 12, dadurch gekennzeichnet, daß die Wasser oder karboniertes Wasser führende Druckleitung über Absperrorgane (28, 29) mit einem Mischraum (32) verbindbar ist, dessen Auslaß ablaufseitig hinter dem Absperrorgan (28) in die Druckleitung (1) mündet und die über Dosiereinrichtungen (34) mit einem Desinfektions- oder Spülmittel beschickbar ist.

14. Ausschenkvorrichtung nach Anspruch 12 oder 13, dadurch gekennzeichnet, daß die Steuereinrichtung (11) eine über Handwähleinrichtungen (12), einen Programmiereingang oder ein Zeitschaltwerk anwählbare Spülsteuerstufe aufweist, in der sie die in der Druckleitung liegenden Absperrorgane (28, 29) und eine Einspritzeinrichtung (34) für die dosierte Zufuhr des Spül- bzw. Desinfektionsmittels betätigt, aber die Zugabe von Getränkebestandteilen in den gespülten Bereich (2, 3, 4) sperrt.

*FIG.1*

*FIG.2*

Europäisches
Patentamt

EUROPÄISCHER RECHERCHENBERICHT

Nummer der Anmeldung

EP 89 89 0076

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 266 201 (COCA-COLA CO.)<br>* Figur 3; Spalte 4, Zeilen 41-65 *<br>--- | 1,2,5-7 | B 67 D 1/00<br>G 05 D 11/13 |
| Y | DE-A-2 211 287 (KÖGEL)<br>* Figur 1; Ansprüche 1,2,4,7,10 *<br>--- | 1,2,5-7 | |
| A | DE-A-3 816 966 (COCA-COLA CO.)<br>--- | | |
| A | FR-A-2 088 753 (GAZ DE FRANCE)<br>--- | | |
| A | US-A-3 552 418 (KRESS)<br>----- | | |

RECHERCHIERTE SACHGEBIETE (Int. Cl.5)

B 67 D
G 05 D

Der vorliegende Recherchenbericht wurde für alle Patentansprüche erstellt

| Recherchenort | Abschlußdatum der Recherche | Prüfer |
|---|---|---|
| DEN HAAG | 03-11-1989 | DEUTSCH J.P.M. |